# DEMANDE DE BREVET EUROPEEN

(11) **EP 4 007 286 A1**
(43) Date de publication de la demande: **01.06.2022**
(21) Numéro de dépôt: 21208844.7
(22) Date de dépôt: 17.11.2021
(51) Int. Cl.: H04N 21/41, G09G 1/00, H04N 21/422, H04N 21/443, H04N 21/4363, G08C 17/02

(54) **PROCÉDÉ DE GESTION D'UNE COMMUNICATION ENTRE UN DISPOSITIF DE COMMANDE ET UN TERMINAL DE LECTURE**

(30) Priorité: 25.11.2020 FR 2012118
(71) Demandeur: ORANGE, 92130 Issy-les-Moulineaux (FR)
(72) Inventeur: MARCHAND, Hervé, 92326 Châtillon (FR); RIVOALEN, Mathieu, 92326 Châtillon (FR)

(57) **Abrégé**

L'invention a trait à un procédé de gestion d'une communication entre un dispositif de commande (TCD1), dit premier dispositif de commande, et un terminal de lecture (STB) aptes à communiquer ensemble via un premier lien de communication, le premier dispositif de commande (TCD1) étant apte à communiquer avec le terminal de lecture (STB) lorsqu'une session de communication est active sur le premier lien de communication, le terminal de lecture (STB) étant relié via un deuxième lien de communication à un dispositif de restitution (TV) ayant plusieurs états de fonctionnement et apte à restituer un contenu en fonction de son état de fonctionnement, caractérisé en ce qu'il comprend les étapes suivantes dans le terminal de lecture:
Une étape d'obtention d'une donnée représentative d'une modification de l'état de fonctionnement du dispositif de restitution,
Une étape de demande de modification de l'état de la session entre le dispositif de lecture (STB) et le premier dispositif de commande (TCD1) en fonction de la donnée obtenue.

## Description

### Domaine technique

L'invention se rapporte à un procédé de gestion d'une communication entre un dispositif de commande et un terminal de lecture

Le dispositif de lecture vise un dispositif apte à accéder à un contenu multimédia localement ou via un réseau de communication. Le dispositif de lecture est commandé par un dispositif de commande.

Le dispositif de commande vise un dispositif servant à manipuler un autre dispositif, à distance, par câble, par infrarouge, ondes radio, etc. la manipulation s'effectue par le biais d'un ensemble de commandes disponibles sur le dispositif de commande. Le dispositif de commande utilisé ci-après pour illustrer l'invention sera une télécommande.

Une télécommande peut être une ressource physique et/ou logicielle. Une télécommande physique est typiquement un boîtier apte à commander un dispositif illustré au moyen d'un récepteur de données dans la suite de la description. Une télécommande logicielle est par exemple une interface homme-machine offerte au moyen d'une application informatique ; ce type d'interface est disponible pour visualiser un contenu sur un ordinateur ; en effet, de plus en plus de contenus (VOD, TVOD) peuvent être lus sur un ordinateur, tablette, ou dispositifs similaires.

### Etat de la technique

Les télécommandes actuelles sont généralement sans fils et sont alimentées électriquement par une source d'énergie telle que des piles, batteries, etc.

Les protocoles de communication utilisables aujourd'hui, par exemple le protocole Bluetooth, consomment énormément d'énergie. La durée de vie des piles raccourcit énormément. L'usure prématurée des piles est gênant pour trois principales raisons. Une première raison est que l'utilisateur doit changer les piles souvent ; Ce changement nécessite une opération manuelle non souhaitée par certaines personnes en particulier les personnes âgées. Une deuxième raison est écologique ; les piles usagées augmentent exponentiellement. Une troisième raison est le coût en argent élevé des piles.

Cette consommation excessive en énergie provient du fait que les télécommandes Bluetooth fonctionnent en mode connecté. Ce mode connecté requiert un maintien d'une session Bluetooth active entre la télécommande et l'équipement à contrôler, ce de manière à transmettre des commandes depuis la télécommande vers l'équipement à contrôler à tout moment.

Il est donc important de gérer de manière très fine la consommation électrique d'une télécommande afin de garantir une durée de vie optimale de la source d'énergie, le plus souvent des piles, présente dans la télécommande.

Il existe donc des mécanismes qui désactivent la session au bout d'un certain temps d'inactivité de l'utilisateur. Par exemple si l'utilisateur n'appuie pas pendant quelques minutes sur une touche de la télécommande alors celle-ci coupe automatiquement la session Bluetooth afin de limiter la consommation d'énergie.

Or, il est important de ne pas couper trop tôt la session Bluetooth pour au moins les deux raisons suivantes.

Une première raison est que l'établissement d'une nouvelle session entraîne un pic de consommation car nécessite beaucoup d'énergie ; des pics répétitifs liés à des déconnexions/reconnexions provoquent inévitablement une usure prématurée des piles.

Une deuxième raison est que le temps de rétablissement d'une session Bluetooth n'est pas instantané et nécessite quelques centaines de millisecondes qui peuvent être perceptibles par l'utilisateur. L'utilisateur peut ainsi, quand la télécommande est en veille, appuyer sur une touche et avoir l'impression que celle-ci n'est pas prise en compte par l'équipement commandé.

Les télécommandes actuelles qui requièrent une session de communication avec l'équipement à commander doivent donc être optimisées afin de couper la session au bon moment quand l'utilisateur n'a plus besoin d'utiliser l'équipement commandé mais pas trop tôt car le rétablissement de la session est très consommateur d'énergie et nécessite un temps qui est perceptible par l'utilisateur.

L'invention vient améliorer la situation.

### L'invention

A cet effet, l'invention concerne un procédé de gestion d'une communication entre un dispositif de commande, dit premier dispositif de commande, et un terminal de lecture aptes à communiquer ensemble via un premier lien de communication, le premier dispositif de commande étant apte à communiquer avec le terminal de lecture lorsqu'une session de communication est active sur le premier lien de communication, le terminal de lecture étant relié via un deuxième lien de communication à un dispositif de restitution ayant plusieurs états de fonctionnement et apte à restituer un contenu en fonction de son état de fonctionnement, caractérisé en ce qu'il comprend les étapes suivantes dans le terminal de lecture:
une étape d'obtention d'une donnée représentative d'une modification de l'état de fonctionnement du dispositif de restitution,
une étape de demande de modification de l'état de la session entre le dispositif de lecture et le premier dispositif de commande en fonction de la donnée obtenue.

L'état de la session entre le terminal de lecture et le dispositif de commande devient dépendant de l'état de fonctionnement du dispositif de restitution. Cette dépendance est judicieuse car l'état de fonctionnement du dispositif de restitution, qui est commandé indépendamment du dispositif de lecture, par exemple via un deuxième dispositif de commande, est souvent lié à une action explicite de l'utilisateur qui souhaite par exemple arrêter la restitution. Pour cela l'utilisateur appuie explicitement sur une touche du deuxième dispositif de commande pour arrêter la restitution du contenu. La probabilité que l'utilisateur allume de nouveau le dispositif de restitution, suite à l'arrêt du dispositif de restitution, dans un court laps de temps, est donc extrêmement faible ; l'invention garantit donc un laps de temps suffisamment long entre la coupure de session et un éventuel rétablissement de session. L'invention évite des coupures et rétablissements de session répétitifs qui sont très consommateurs d'énergie et qui nécessitent un délai d'attente qui est souvent perceptible par l'utilisateur. La solution est donc très avantageuse en termes d'économie d'énergie et d'expérience utilisateur.

En outre, grâce à l'invention, la session est rétablit avant même que l'utilisateur n'émette une commande au terminal de lecture via le premier dispositif de commande. Grâce à l'invention, le temps de rétablissement de la session Bluetooth n'est pas plus perceptible par l'utilisateur, le rétablissement ayant déjà démarré, voire terminé, avant même qu'une commande ne soit émise par le premier dispositif de commande à destination du dispositif de lecture.

Selon un premier mode de mise en oeuvre particulier de l'invention, l'étape d'obtention de la donnée représentative d'une modification de l'état de fonctionnement du dispositif de restitution inclut une étape de réception des commandes issues de la deuxième télécommande et de détection de commandes ayant pour effet un changement d'état de fonctionnement du dispositif de lecture. La détection d'une demande de modification de l'état de fonctionnement du dispositif de restitution vise ici une intention de changement d'état de fonctionnent du dispositif de restitution, la commande issue du deuxième dispositif n'ayant pas, à ce stade, encore été exécutée par le dispositif de restitution. Ce mode a pour avantage de détecter un changement d'état de fonctionnement du dispositif de restitution avant même que le dispositif de restitution exécute la commande transmise par la deuxième télécommande et que le dispositif de restitution change effectivement d'état de fonctionnement.

Selon un deuxième mode de mise en œuvre particulier de l'invention, qui pourra être mis en œuvre alternativement ou cumulativement avec le précédent, si l'état de fonctionnement du dispositif de restitution empêche une restitution d'un contenu, la modification consiste à couper la session de communication entre le terminal de lecture et le premier dispositif de commande. Ce premier mode vise une modification qui a pour effet de couper la session par exemple dès que le dispositif de restitution est éteint ou entre dans un état de veille.

Selon un troisième mode de réalisation de l'invention, qui pourra être mis en œuvre alternativement ou cumulativement avec les précédents, si la modification de l'état de fonctionnement est un passage d'un état dans lequel le dispositif de restitution est apte à restituer un contenu, la modification consiste à établir la session. Ce troisième mode vise un établissement de session dès que le dispositif de restitution s'allume.

Selon une variante du troisième mode, un rétablissement de la session comprend une transmission d'une commande de réveil au dispositif de commande.

Selon un aspect matériel, l'invention se rapporte à une entité de gestion d'une communication entre un dispositif de commande, dit premier dispositif de commande, et un terminal de lecture aptes à communiquer ensemble via un premier lien de communication, le dispositif de commande étant apte à communiquer avec le terminal de lecture lorsqu'une session de communication est active sur le premier lien de communication, le terminal de lecture étant relié via un deuxième lien de communication à un dispositif de restitution ayant plusieurs états de fonctionnement et apte à restituer un contenu en fonction de son état de fonctionnement, caractérisé en ce qu'il comprend

Un module d'obtention d'une donnée représentative d'une modification de l'état de fonctionnement du dispositif de restitution,

Un module de demande de modification de l'état de la session entre le dispositif de lecture et le dispositif de commande en fonction de la donnée obtenue.

Selon un autre aspect matériel, l'invention a trait à un programme d'ordinateur apte à être mis en œuvre dans une entité de gestion tel que définie ci-dessus, ledit programme comprenant des instructions de code qui, lorsque le programme est exécuté réalise l'étape définie dans le procédé défini ci-dessus.

Selon un autre aspect matériel, l'invention a trait à un support d'enregistrement lisible par un processeur de données sur lequel est enregistré un programme comprenant des instructions de code de programme pour l'exécution des étapes du procédé défini ci-dessus.

Précisions ici que le support de données peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente un système informatique sur lequel est illustré un exemple de réalisation de l'invention.
[Fig 2] est une vue schématique des circuits présents dans le terminal de lecture.
[Fig 3] est une vue schématique des étapes mises en œuvre selon un premier mode de réalisation de l'invention.
[Fig 4] est une vue schématique des étapes mises en œuvre selon un deuxième mode de réalisation de l'invention.
[Fig 5] est une vue schématique des étapes mises en œuvre selon une variante des premiers et deuxième modes de réalisation de l'invention.

### Description détaillée d'un exemple de réalisation illustrant l'invention :

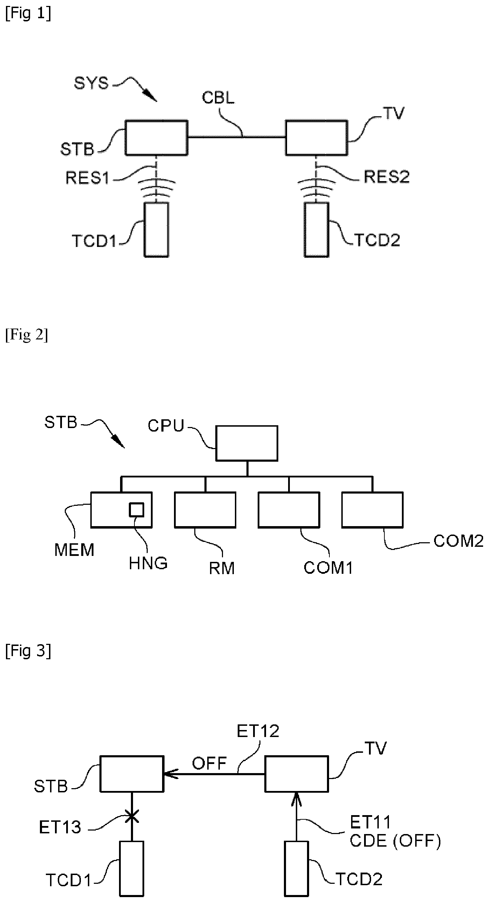

La figure 1 représente un système SYS comprend un dispositif de commande par exemple une télécommande TCD1, dite première télécommande dans la suite, apte à commander un terminal de lecture STB.

La première télécommande TCD1 inclut classiquement un processeur, un module de stockage pour le stockage de données et au moins un élément de commandes tel que des touches de commandes (appelée aussi codes touches) par exemple situés sur une des faces de la télécommande. Les modules et éléments de commande, ainsi que le processeur, sont alimentés par une source d'énergie électrique telle qu'une pile ou une batterie. Les modules installés et éléments de commande sont reliés entre eux par l'intermédiaire d'un bus. Rappelons qu'un bus a pour fonction d'assurer le transfert de données numériques entre les différents circuits d'un ordinateur. Dans notre exemple, le bus en question inclut un bus de données et un bus de contrôle.

Le terminal de lecture STB est relié à un dispositif de restitution TV apte à restituer un contenu. Dans notre exemple, le dispositif de restitution est un téléviseur TV, mais pourrait très bien être un simple écran, une enceinte, etc.

Le dispositif de restitution a plusieurs états de fonctionnement. Ces états de fonctionnement peuvent être commandés depuis un dispositif de commande par exemple une télécommande TCD2, dite deuxième télécommande dans la suite.

Les dispositifs de commande peuvent indifféremment être intégrées au dispositif auxquels ils sont associés ou situés à distance dans le cas d'une télécommande. Dans notre exemple, le deuxième dispositif de commande TCD2 est similaire à la première télécommande TCD1. Cette deuxième télécommande TCD2 communique avec le dispositif de restitution TV via un deuxième lien de communication RES2.

Les états de fonctionnement d'un dispositif de restitution TV sont au moins au nombre de deux. Les états de fonctionnement les plus courants sont
un état de fonctionnement normal dans lequel le dispositif de restitution est prêt à restituer un contenu ;
un état de veille ou un état éteint qui nécessitent une commande de réveil et une commande de mise sous tension, respectivement, pour restituer un contenu.

Nous nous limiterons à ces deux états pour l'exposé de l'invention. D'autres états sont bien sûr possibles.

Le contenu peut être stocké dans une mémoire du terminal de lecture STB ou sur un support de données tel qu'un DVD inséré dans le terminal de lecture.

Le contenu peut aussi être stocké dans un dispositif distant connecté au terminal de lecture STB par exemple via un réseau Internet. Dans cette configuration, le terminal de lecture STB accède au contenu demandé via le réseau Internet par exemple via une passerelle domestique (non représentée sur les figures). La passerelle GTW est typiquement une passerelle domestique de type Livebox^{®}.

La connexion entre le décodeur STB et le téléviseur TV est quelconque ; par exemple la connexion entre le décodeur et le téléviseur est un câble HDMI un câble ETHERNET ou tout autre câble équivalent.

La connexion entre le décodeur STB et la passerelle est également quelconque par exemple une liaison Ethernet ou un réseau Wi-Fi.

Dans notre exemple, le contenu est un contenu multimédia stocké à distance sur une plateforme de services qui délivre par exemple des contenus multimédias tels que des chaînes de télévision, des films de télévision à la demande (VOD), etc.

Dans notre exemple, la première télécommande TCD1 est apte à commander le décodeur STB directement sans intermédiaire. Pour cela, la première télécommande TCD1 communique avec le décodeur STB via un premier lien de communication RES1 de type courte portée comme par exemple une connexion Bluetooth, ZigBee, Wi-Fi, etc. La première télécommande TCD1 et le décodeur STB sont équipés de modules de communication respectifs.

Une session peut être en cours ou coupée ; on parlera de session active ou inactive dans la suite, respectivement. Comme cela sera expliqué ci-dessous, une communication n'est possible entre le décodeur STB et la première télécommande TCD1 que lorsqu'une session de communication est active. En d'autres mots, l'envoi d'une commande depuis la première télécommande TCD1 vers le décodeur STB nécessite qu'une session soit active (établie) entre la première télécommande TCD1 et le décodeur STB.

En général, une session de communication est inactive lorsque la première télécommande TCD1 et/ou le décodeur STB passe(nt) dans un état de veille ou est (sont) éteint(s). Rappelons qu'un état de veille peut par exemple faire suite à une période d'inactivité de l'utilisateur.

Lorsque la première télécommande TCD1 est dans un état de veille, L'envoi d'une commande depuis la première télécommande TCD1 nécessite, un rétablissement de session entre la première télécommande TCD1 et le décodeur STB.

En relation avec la figure 2, on considère maintenant la structure simplifiée du décodeur STB selon un exemple de réalisation de l'invention. Un tel décodeur STB est adapté pour mettre en œuvre le procédé de gestion d'une communication entre le décodeur STB et première télécommande TCD1.

Le décodeur STB comprend des ressources physiques et/ou logicielles, à savoir des mémoires associées à un processeur CPU. Les mémoires peuvent être de type ROM (de l'anglais « Read Only Memory ») ou RAM (de l'anglais « Random Access Memory ») ou encore Flash.

Le décodeur STB comprend en outre un circuit de traitement pour mettre en œuvre le procédé de gestion d'une communication entre le décodeur STB et la première télécommande TCD1 selon différents modes de réalisation de l'invention, le circuit de traitement comprenant un processeur CPU piloté par une entité de gestion ENT, dans notre exemple un programme d'ordinateur, stockée dans une mémoire morte MEM, l'entité MNG étant apte à mettre en œuvre le procédé de gestion.

A l'initialisation, les instructions de code du programme d'ordinateur PGM sont par exemple chargées dans une mémoire RAM, référencée MR, avant d'être exécutées par le processeur CPU.

Le décodeur STB comprend principalement :
une interface de communication COM1 qui est adaptée pour recevoir des commandes issues de la première télécommande TCD1 ;
une interface de communication COM2 qui est adaptée pour échanger des données avec un serveur distant de manière à recevoir des contenus multimédias à savoir selon le cas d'usage des chaînes de télévision et/ou des vidéos et/ou des jeux en ligne, etc.

Les interfaces de communication COM1, COM2, ainsi que l'entité de gestion MNG, sont pilotés par le processeur PRO du circuit de traitement.

Comme indiqué précédemment, le dispositif de restitution TV peut avoir plusieurs états de fonctionnement. Selon son état, le dispositif de restitution TV peut restituer ou pas un contenu multimédia. Par exemple, si le dispositif de restitution TV est inactif (éteint ou en veille), celui-ci ne peut pas restituer un contenu en l'état; à l'inverse s'il est actif, le dispositif de restitution TV peut restituer.

L'invention propose de détecter une modification de l'état de fonctionnement du dispositif de restitution, et de modifier de l'état de la session entre la première télécommande TCD1 et le décodeur STB en fonction l'état de fonctionnement détecté du dispositif de restitution TV.

La figure 3 illustre un premier mode de réalisation du procédé de l'invention.

Sur cette figure 3, on considère que :
une session est active entre le décodeur STB et la première télécommande TCD1;
le dispositif de restitution TV est dans un état de fonctionnement normal c'est-à-dire que l'écran est prêt à recevoir un contenu multimédia pour y être affiché.

Les étapes sont les suivantes :
Lors d'une première étape ET11, l'utilisateur commande via la deuxième télécommande TCD2 une mise hors tension du dispositif de restitution TV.

Lors d'une deuxième étape ET12, le dispositif de restitution TV reçoit la commande et exécute la commande.

Lors d'une troisième étape ET13 le dispositif de restitution TV transmet au décodeur STB une donnée référencée OFF représentative du nouvel état de fonctionnent du dispositif de restitution TV. La transmission de cette donnée peut être réalisée au moyen du protocole HDMI CEC (sigle anglosaxon de Consumer Electronics Control) connu de l'homme du métier.

Lors d'une quatrième étape ET14, le décodeur STB reçoit la donnée OFF depuis le dispositif de restitution TV.

Lors d'une cinquième étape ET15, le décodeur STB, suite à la réception, coupe la session en cours. La coupure peut être précédée d'un message du décodeur STB à destination de la première télécommande TCD1 informant la première télécommande de la coupure de la session. Suite à la réception du message, la première télécommande TCD1 peut être mise en veille.

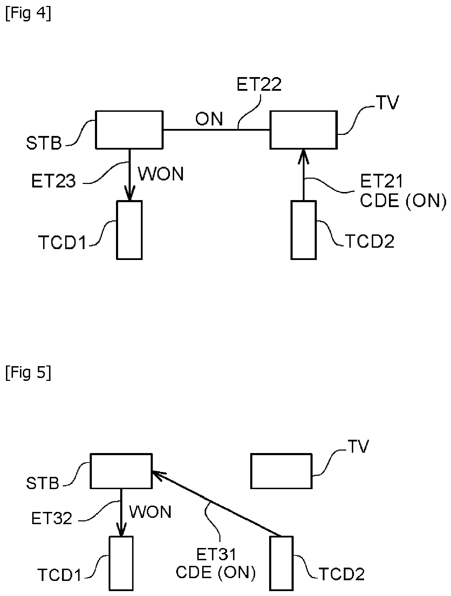

La figure 4 illustre un deuxième mode de réalisation du procédé de l'invention.

Sur cette figure 4, on considère que :
une session est inactive entre le décodeur STB et la première télécommande TCD1;
le dispositif de restitution TV est dans un état de fonctionnement (par exemple en veille ou éteint) dans lequel un affichage requiert une action.

Les étapes sont les suivantes :
Lors d'une première étape ET21, l'utilisateur commande via la deuxième télécommande TCD2 une mise sous tension du dispositif de restitution TV.

Lors d'une deuxième étape ET22, le dispositif de restitution TV reçoit la commande et exécute la commande.

A ce stade, le dispositif de restitution TV est sous tension.

Lors d'une troisième étape ET23, le dispositif de restitution TV transmet au décodeur STB une donnée référencée ON représentative du nouvel état de fonctionnent du dispositif de restitution TV. La transmission de cette donnée peut encore une fois être réalisée au moyen du protocole HDMI CEC (sigle anglosaxon de Consumer Electronics Control) connu de l'homme du métier.

Lors d'une quatrième étape ET24, le décodeur STB reçoit la donnée ON issue du dispositif de restitution TV.

Lors d'une cinquième étape ET25, le décodeur STB, suite à la réception de la donnée ON, transmet un message à la première télécommande TCD1 pour modifier son état de fonctionnement. La première télécommande TCD1 passe alors de l'état de veille à un état de fonctionnements normal. Suite à ce passage, une session de communication est activée entre le décodeur STB et la première télécommande TCD1. Le message permettant de réveiller la première télécommande TCD1 est par exemple le message « Wake On Bluetooth » connu de l'homme du métier.

Les deux modes décrits ci-dessus, qui peuvent être mise en œuvre isolément ou en combinaison, peuvent faire l'objet de variantes.

Selon une variante, illustrée sur la figure 5, le dispositif de restitution TV est commandé via la télécommande TCD2. Dans cette configuration, l'étape d'obtention de la donnée représentative d'une modification de l'état de fonctionnement du dispositif de restitution inclut une étape de réception ET31 des commandes CDE(ON) issues de la deuxième télécommande TCD2. Le module de gestion MNG intercepte les commandes transmises par la deuxième télécommande CD2 qui sont destinées au dispositif de restitution TV. Le dispositif de lecture STB détecte ensuite, parmi les commandes interceptées, les commandes ayant pour effet un changement d'état du dispositif de lecture.

Si une commande interceptée, provenant de la deuxième télécommande TCD2, a pour effet de changer l'état de fonctionnement du dispositif de restitution TV, le module de gestion MNG réalise l'étape ET15 ou ET25 en fonction de l'état de fonctionnement courant du dispositif de restitution TV. Dans notre exemple, sur la figure 5, le décodeur STB, suite à la réception, transmet lors d'une deuxième étape ET32 (l'étape ET25), un message à la première télécommande TCD1 pour modifier son état de fonctionnement. La première télécommande TCD1 passe alors de l'état de veille à un état de fonctionnements normal. Suite à ce passage, une session de communication est activée entre le décodeur STB et la première télécommande TCD1.

Signalons enfin ici que, dans le présent texte, le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion d'une communication entre un dispositif de commande (TCD1), dit premier dispositif de commande, et un terminal de lecture (STB) aptes à communiquer ensemble via un premier lien de communication, le premier dispositif de commande (TCD1) étant apte à communiquer avec le terminal de lecture (STB) lorsqu'une session de communication est active sur le premier lien de communication, le terminal de lecture (STB) étant relié via un deuxième lien de communication à un dispositif de restitution (TV) ayant plusieurs états de fonctionnement et apte à restituer un contenu en fonction de son état de fonctionnement, **caractérisé en ce qu'**il comprend les étapes suivantes dans le terminal de lecture:
une étape d'obtention (ET12,ET22) d'une donnée (ON,OFF) représentative d'une modification de l'état de fonctionnement du dispositif de restitution,
une étape de demande de modification (ET13,ET23) de l'état de la session entre le dispositif de lecture (STB) et le premier dispositif de commande (TCD1) en fonction de la donnée obtenue.

2. Procédé de gestion selon la revendication 1, **caractérisé en ce que** le dispositif de restitution est commandé via un dispositif de commande (TCD2), dit deuxième dispositif de commande, **en ce que** l'étape d'obtention de la donnée représentative d'une modification de l'état de fonctionnement du dispositif de restitution inclut une étape de réception (ET31) des commandes issues de la deuxième télécommande (TCD2) et de détection de commandes ayant pour effet un changement d'état du dispositif de lecture.

3. Procédé de gestion selon la revendication 1, **caractérisé en ce que** si l'état de fonctionnement du dispositif de restitution empêche une restitution d'un contenu, la modification consiste à couper la session de communication entre le terminal de lecture et le dispositif de commande.

4. Procédé de gestion selon la revendication 1, **caractérisé en ce que** si la modification de l'état de fonctionnement est un passage d'un état dans lequel le dispositif de restitution est apte à restituer un contenu, la modification consiste à établir la session.

5. Entité de gestion (MNG) d'une communication entre un dispositif de commande (TCD1), dit premier dispositif de commande, et un terminal de lecture (STB) aptes à communiquer ensemble via un premier lien de communication, le premier dispositif de commande (TCD1) étant apte à communiquer avec le terminal de lecture (STB) lorsqu'une session de communication est active sur le premier lien de communication, le terminal de lecture (STB) étant relié via un deuxième lien de communication à un dispositif de restitution (TV) ayant plusieurs états de fonctionnement et apte à restituer un contenu en fonction de son état de fonctionnement, **caractérisé en ce qu'**il comprend
un module d'obtention d'une donnée (ON,OFF) représentative d'une modification de l'état de fonctionnement du dispositif de restitution (TV),
un module de demande de modification de l'état de la session entre le dispositif de lecture (STB) et le premier dispositif de commande (TCD1) en fonction de la donnée obtenue.

6. Dispositif de lecture **caractérisée en ce qu'**elle comprend une entité de gestion (MNG) telle que définie dans la revendication 5.

7. Programme d'ordinateur apte à être mis en œuvre dans une entité de gestion tel que définie dans la revendication 5, ledit programme comprenant des instructions de code qui, lorsque le programme est exécuté réalise l'étape définie dans la revendication 1.

8. Support d'enregistrement lisible par un processeur de données sur lequel est enregistré un programme comprenant des instructions de code de programme pour l'exécution des étapes du procédé défini dans l'une des revendications 1 à 4.
